# EUROPEAN PATENT SPECIFICATION

(11) **EP 0 579 842 B1**
(45) Date of publication and mention of the grant of the patent: **29.10.1997**
(21) Application number: 93903325.4
(22) Date of filing: 05.02.1993
(51) Int. Cl.: B62H 5/16, B62H 5/00, B62H 5/14

(54) **LOCKING DEVICE FOR MOTORBICYCLE**
VERRIEGELUNGSVORRICHTUNG FÜR MOTORRAD
DISPOSITIF DE VERROUILLAGE POUR MOTOCYCLETTE

(30) Priority: 06.02.1992 JP 13087/92 U; 10.04.1992 JP 30798/92 U; 10.04.1992 JP 30799/92 U; 20.05.1992 JP 40225/92 U
(43) Date of publication of application: 26.01.1994
(73) Proprietor: KABUSHIKIKAISHA HONDA ACCESS, Asaka-si, Saitama 351 (JP)
(72) Inventor: IWATA, Kouji 3-16-21, Kamimuneoka, Saitama 353 (JP); IKEZAKI, Masahiko Mihararyou, Asaka-si Saitama 351 (JP); ASAKAWA, Eigiroo A203, 8-5-30, Nobidome, Saitama 352 (JP); SATO, Masao 6-11-2, Mukoudaichou, Tokyo 188 (JP); KUSAKARI, Hidehiko Castle N02 305 247-8, Fujikubo, Iruma-gun Saitama 358 (JP); TANAKA, Yoshiaki 730-111, Imafuku, Saitama 356 (JP)
(74) Representative: Leale, Robin George
(86) International application number: JP9300157
(87) International publication number: WO9315948

(56) References cited:
- FR-A- 991 793
- JP-A-56 120 464
- JP-U- 6 275 173
- JP-U-53 128 665
- JP-Y-58 011 660

## Description

This invention relates to a locking device of a wire-lock type for a motorcycle.

Japan Unexamined Utility Model Publication (Kokai) No. 62-75173 discloses a locking device for a motorcycle in which a wire member constituting a wire-lock is extensibly attached at its intermediate position to a carrier basket attached to a front part of the motorcycle, and is provided at its one end with a lock portion and at its other end with an engaging portion engageable with the lock portion. Upon engaging the extended wire portion with a front wheel when the motorcycle is stationary, the lock portion of the wire member may be engaged with the engaging portion thereof so that the motorcycle cannot be moved. Also, Japan Unexamined Patent Publication (Kokai) No. 56-120464 discloses a locking device for a motorcycle in which a wire member of a wire-lock engageable with a rear wheel is housed in a hollow seat frame.

However, these wire members serve no function when they are housed in the space of the motorcycle frame during driving of the motorcycle, at which time they cannot be seen from the outside. Since these wire members are specially attached to the frame bodies, it is desirable for them to be given active roles to fulfil some function during driving of the motorcycle as well as when it is stopped so as to achieve an efficient use of parts.

FR-A-991793 discloses a bicycle provided with a locking wire which is arranged to be secured in a position extending along a mudguard when not in use. However, the locking wire must be removed from the mudguard when it is to be used.

According to the present invention there is provided, in a motorcycle having an external cover member over a front or rear wheel thereof, a lock for the said wheel comprising at least one locking wire connected to the motorcycle body and having two interengageable locking members at respective ends thereof, the said lock having an inoperative condition in which the interengaged locking members are received in a holder on the external surface of the said cover member and the parts of the locking wire(s) leading to said locking members extend along the external surface of said cover member in decorative fashion, and an operative condition in which the said locking wire(s) extends through the said wheel to prevent rotation thereof, the locking wire(s) being movable directly to said operative condition upon separating the said locking members from the said holder and from each other, whilst remaining connected to the motorcycle body.

With this arrangement, as the wire member is arranged along the surface of the cover member during driving of the motorcycle and supported detachably by the holder mounted on the surface of cover, the wire member serves as a decorative member and as a result, the cover surface is decorated as if it were provided with a decorative member such as a lace. Accordingly, since the wire member becomes a stationary component of the motorcycle in appearance and is not hidden away in such a place as to be unseen from the outside during driving of the motorcycle, it is possible to make use of the components efficiently both when the motorcycle is stopped and during driving thereof.

In one form of the invention, the said wheel is a front wheel and the said holder is located on a front surface of the said cover member. The locking wire(s) may then be secured to a headpipe of the motorcycle frame and pass through holes in a bottom wall of the said cover member. The wire member may then be arranged to have a substantial V-shape when viewed from the sides of the motorcycle during driving thereof.

With this arrangement, since the rear portion of the wire member is inserted into the front cover to be supported by the headpipe and the front portion thereof is exposed on the surface of the front cover, it is possible to prevent the wire member from hanging loosely, because the exposed portion of the wire member is just a front portion thereof which is necessary for locking, and is short. In addition, while the motorcycle is being driven, since the wire member is arranged in a substantial V-shape when viewed from the sides and the front portion of the wire member is supported by the holder, the wire member is urged towards the holder by its own restoring elasticity so that the supporting of the wire member by the holder becomes stable. Further, as the holes through which the wire member extends to the front surface are formed downwardly in the front cover and this position makes the holes inconspicuous, it is possible to attach the wire member to the motorcycle body at a later stage without marring the appearance of the motorcycle body, and relatively easily.

In another form of the invention the said locking wire(s) has parts thereof extending rearwardly along the opposite sides of a floor of the motorcycle body and fastened to the said floor by stays.

With this arrangement, since a portion of the wire member is supported by the motorcycle body and the wire member is arranged, as an exposed decorative member, from the surface of the cover of the front wheel to the step floor, the exposed portion becomes larger and as a result, it is possible to increase the portion which functions as a decorative member during driving of the motorcycle. Further, since the wire member can be attached to the floor by means of securing members, it is not necessary to carry out any special after treatment on the body during attachment of the wire member, and it is possible to make the attachment of the wire member to the body easy and quick.

In another form of the invention the said wheel is a rear wheel and the said holder is located on a rear surface of the said cover member. Then, in the inoperative condition of the lock, the said locking wire(s) may extend along the opposite sides of the cover member, being retained thereto by clips.

Thus, while the motorcycle is being driven, it is possible to make left and right side portions of the wire member as decorative members on the surface of the rear cover whereby both during stopping and driving of the motorcycle the components can be efficiently used. Also, this provides a locking device suitable for the rear wheel and makes it possible to easily lock the motorcycle by making use of a guardrail support or a utility pole.

Some embodiments of the invention will now be described by way of example and with reference to the accompanying drawings, in which:-
Figs. 1 to 6 relate to a first embodiment of the present invention, wherein:
   Fig. 1 is a side elevational view of a vehicle body front of a motorcycle to which the present embodiment is applied;
   Fig. 2 is a perspective view of the vehicle body front of the motorcycle;
   Fig. 3 is a partially cut away view showing the vehicle body as seen from the arrow direction A of Fig. 1;
   Fig. 4 is a side elevational view showing the relevant parts partially cut away;
   Fig. 5 is an enlarged sectional view of the relevant parts thereof; and
   Fig. 6 is an exploded perspective view of the relevant parts thereof;
Figs. 7 to 9 relate to a second embodiment of the invention, wherein:

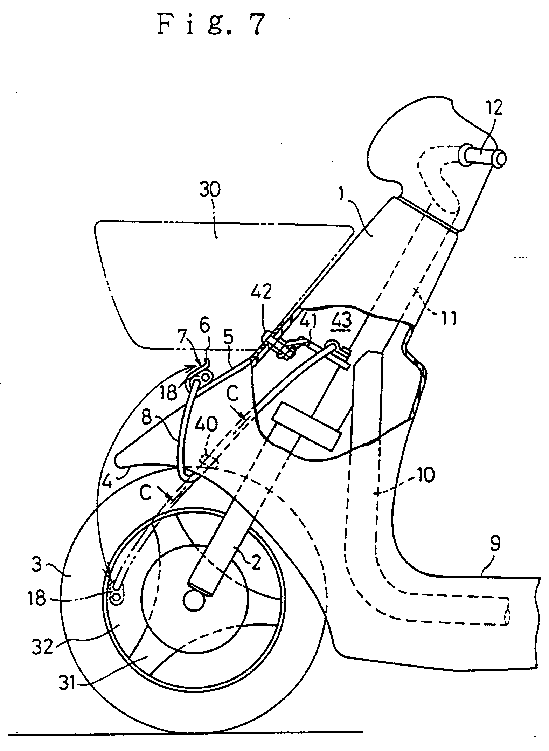

   Fig. 7 is a side elevational view showing the vehicle body front of the motorcycle, partially cut away, with the present embodiment applied thereto;

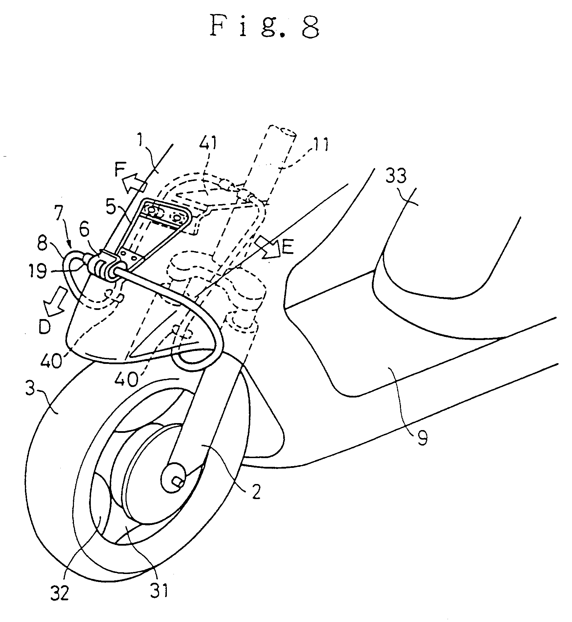

   Fig. 8 is a perspective view thereof; and

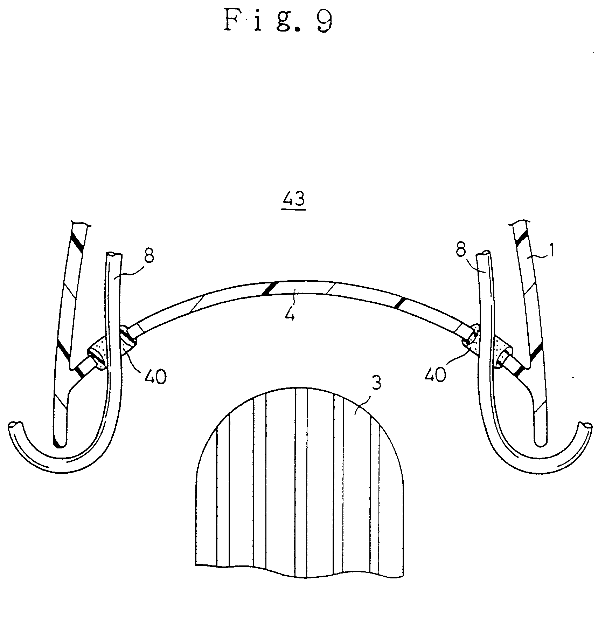

   Fig. 9 is an enlarged sectional view taken along line CC of Fig. 7;

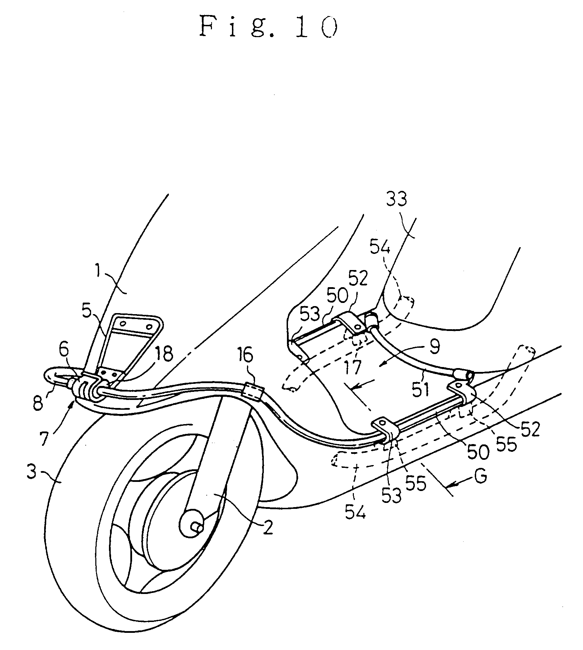

Figs. 10 through 13 relate to a third embodiment of the present invention, wherein:
   Fig. 10 is a perspective view of the vehicle body front of the motorcycle with the present embodiment applied thereto;

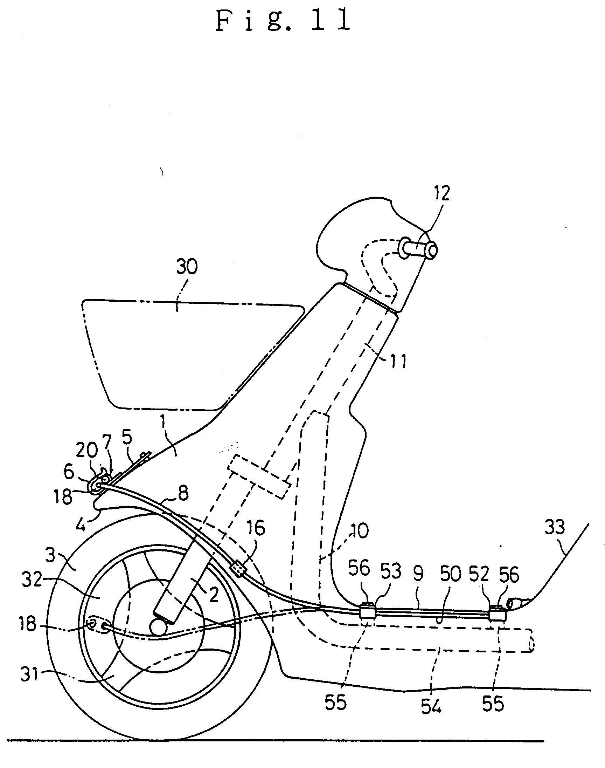

   Fig. 11 is a side elevational view thereof;

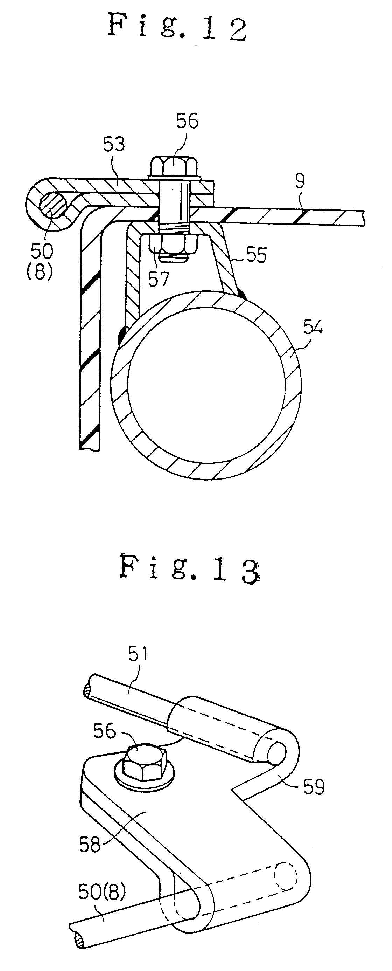

   Fig. 12 is an enlarged sectional view taken along line G-G of Fig. 10; and
   Fig. 13 is an enlarged perspective view of the relevant parts of the motorcycle;

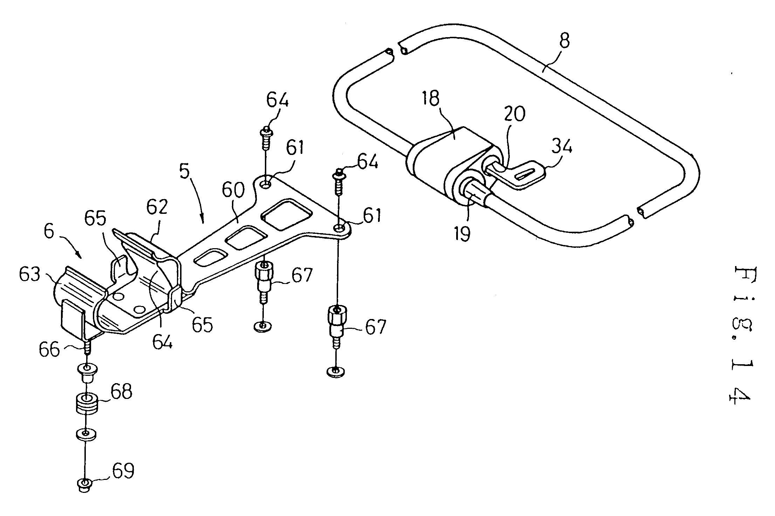

Figs. 14 through 16 relate to a fourth embodiment of the present invention, wherein:
   Fig. 14 is an exploded perspective view of the relevant parts of the motorcycle;

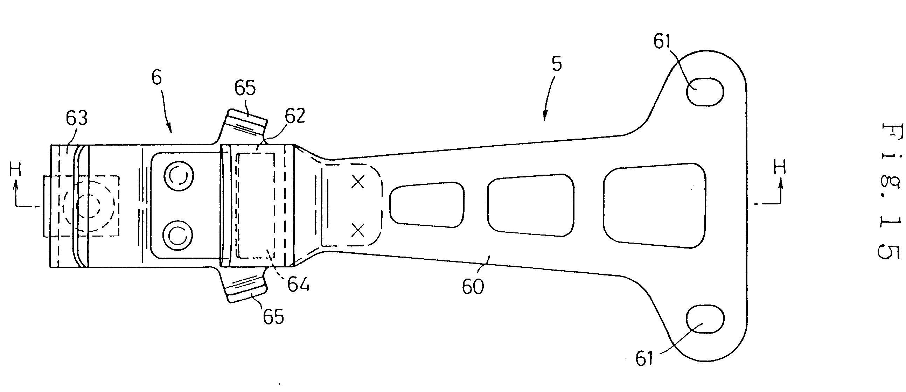

   Fig. 15 is a plan view of the relevant parts thereof; and

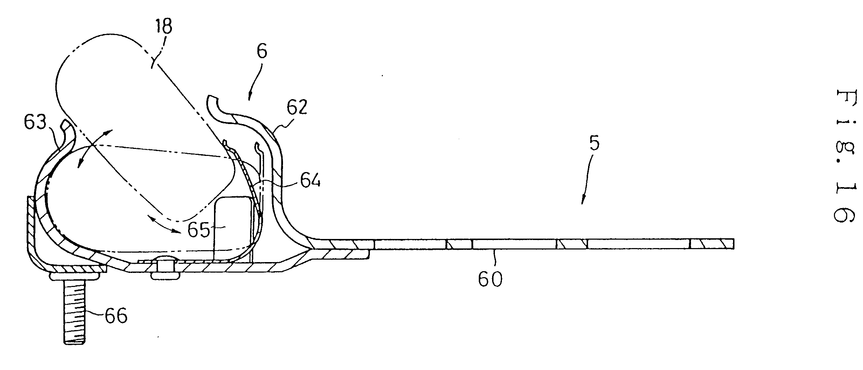

   Fig. 16 is an enlarged sectional view taken along line H-H of Fig. 15;

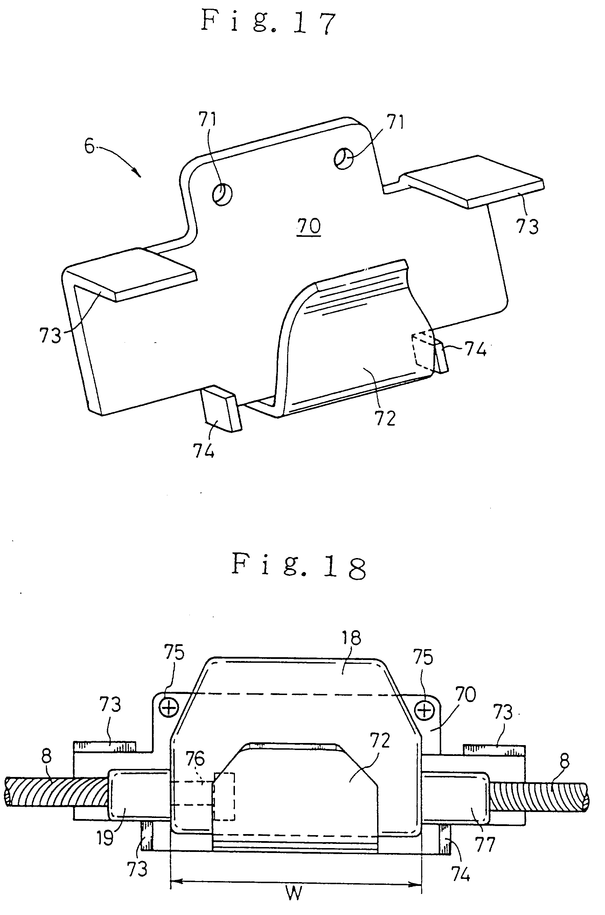

Figs. 17 through 19 relate to a fifth embodiment of the present invention, wherein:
   Fig. 17 is a perspective view of the relevant parts of the motorcycle; and

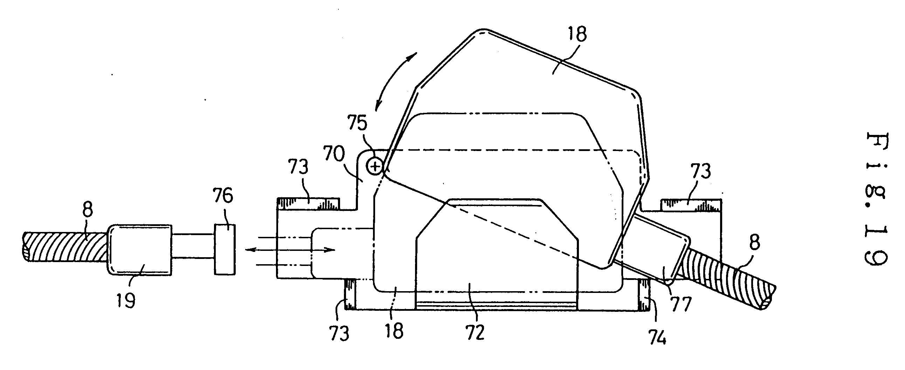

   Figs. 18 and 19 are views showing the condition of the relevant parts thereof, in use;

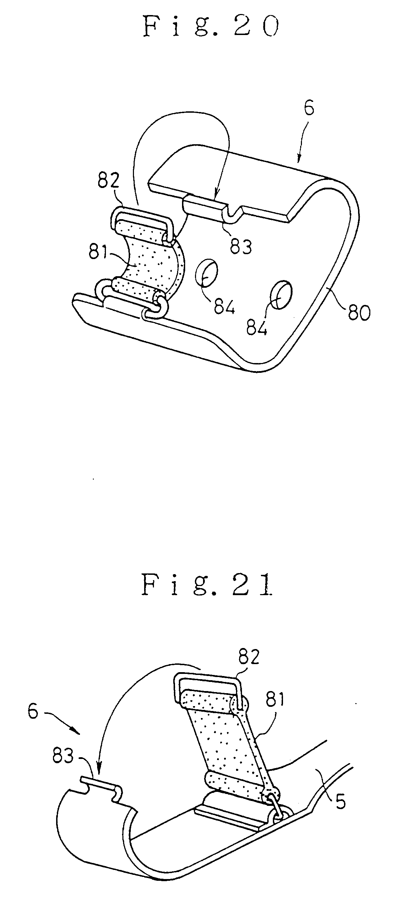

   Fig. 20 is a perspective view of the relevant parts of a sixth embodiment;
   Fig. 21 is a perspective view of the relevant parts of a seventh embodiment;

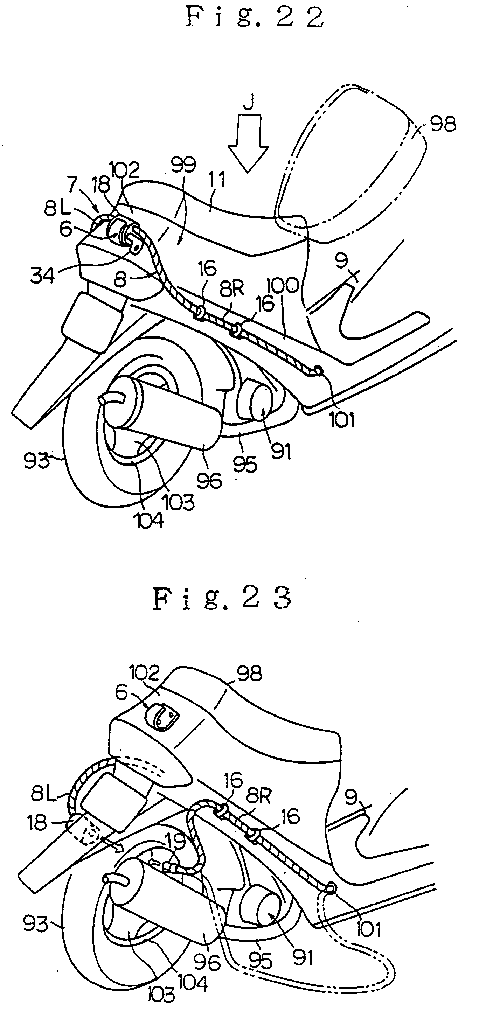

Figs. 22 through 26 relate to a eighth embodiment the present invention, wherein:
   Fig. 22 is a perspective view showing the relevant parts of a motorcycle body during driving thereof;

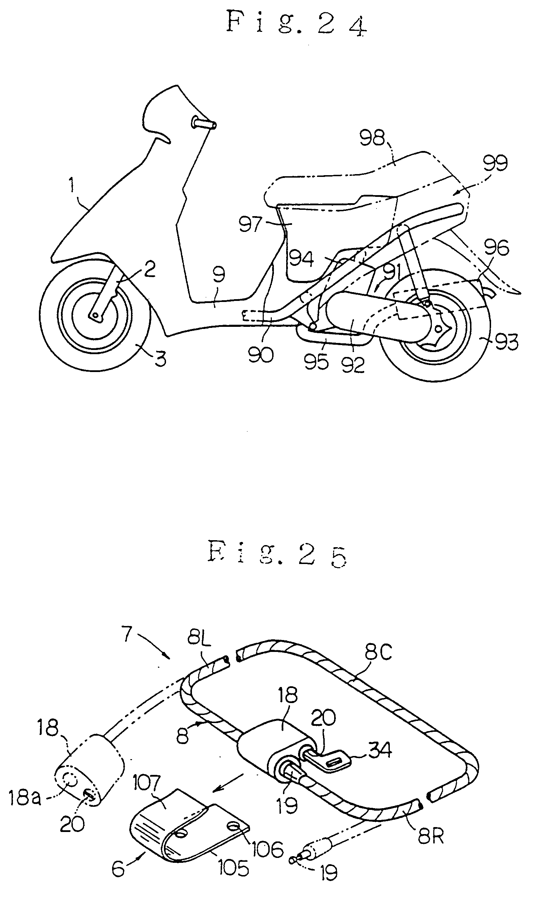

   Fig. 23 is a perspective view of the relevant parts of the motorcycle during stopping thereof;
   Fig. 24 is a side elevational view showing the relevant parts of the motorcycle partially cut away;
   Fig. 25 is an exploded perspective view of the essential parts thereof; and

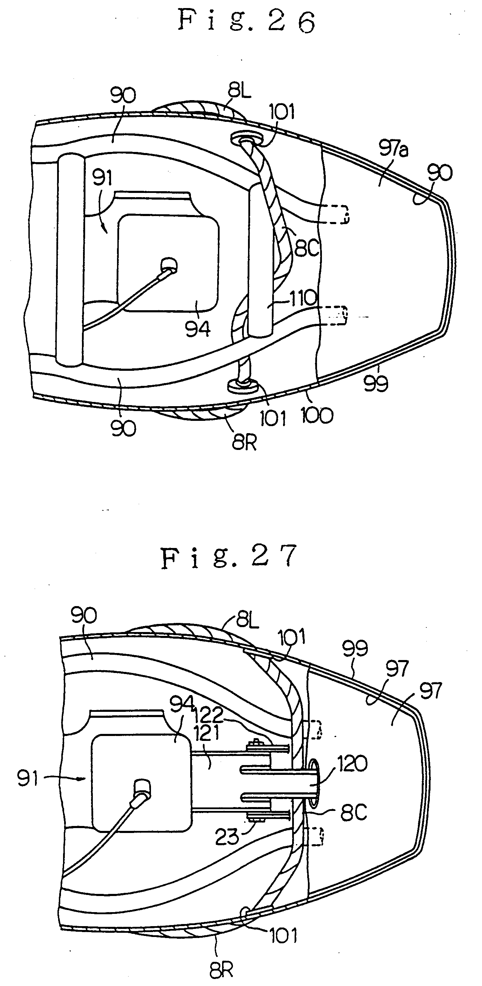

   Fig. 26 is a view showing the essential parts of the present embodiment partially cut away from the direction of an arrow A of Fig. 22; and
   Fig. 27 relates to a ninth embodiment of the invention and is a view corresponding to Fig. 26.

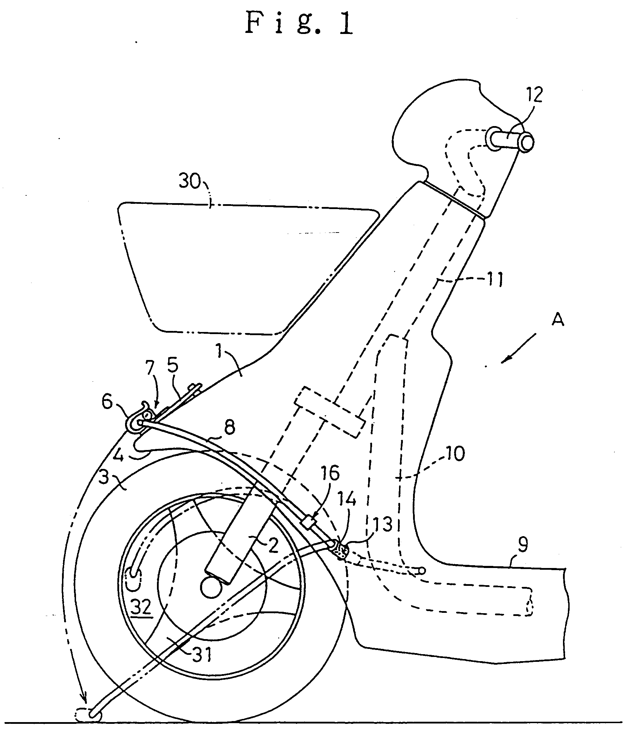

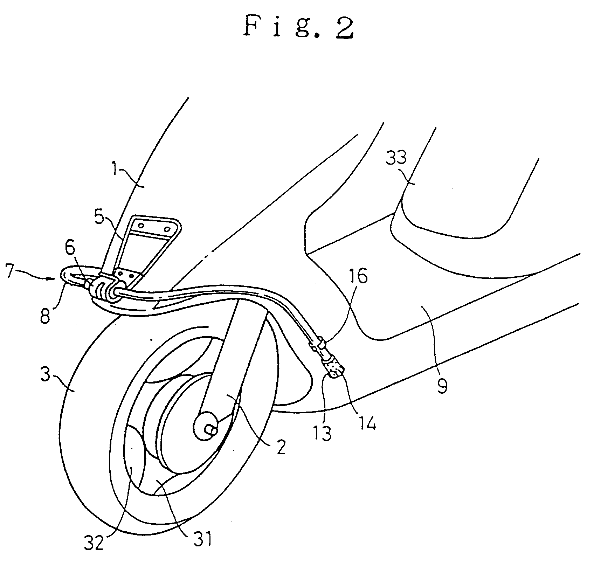

A first embodiment of the present invention will be described hereinafter in conjunction with Figs. 1 to 6. The present embodiment is a scooter-type motorcycle, wherein Fig. 1 shows an external side surface of the front part of a vehicle body, while Fig. 2 shows the condition of the front part thereof as seen obliquely from the front.

First, in Fig. 2, a front cover 1 provided at a front part of a vehicle body covers an upper part of a front fork 2, while a part of the front cover 1 also serves as a fender portion 4 for a front wheel 3 supported at a lower part of the front fork 2.

The front cover 1 is provided at its front surface near the top end portion thereof with a lock bracket 5, and a front end portion of a wire lock 7 is engagedly supported by a holder 6 provided at a lower part of the lock bracket 5. The wire lock 7 comprises a loop-shaped wire member 8, most of which form an exposed portion extending from the side surface of the front cover 1 to the front surface thereof, while the rest of the wire member 8 enters the front cover 1 from the side and passes by the lower part of a floor 9 integrally formed with the front cover 1.

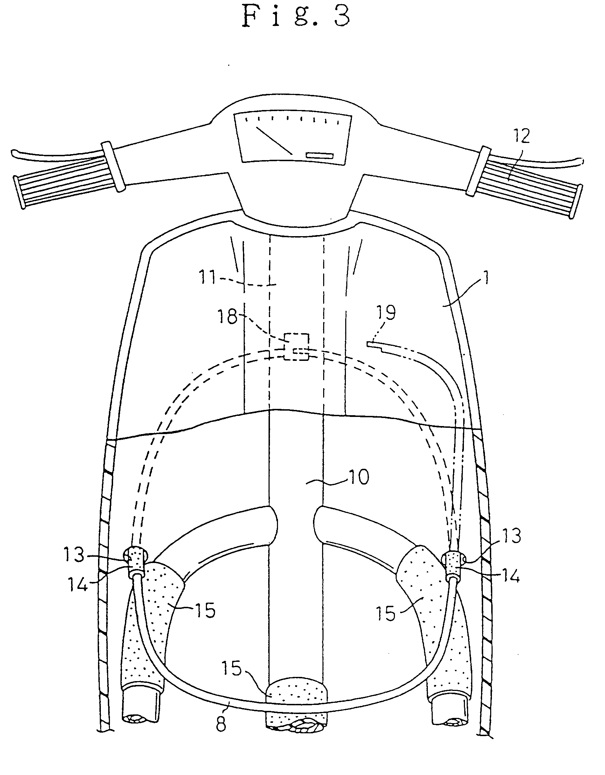

As is clear from Fig. 3, showing a part of a back side of the front cover 1 and with the floor 9 partially cut away, and from the arrow direction A of Fig. 1, the portion of the wire member 8 entering the front cover 1 is retained by a main frame 10. This main frame 10 extends under the floor 9, and the front portion of the frame is bent upwardly to enter the front cover 1 and is connected to a headpipe 11. The headpipe 11 is connected at its lower part to the front fork 2 and at its upper part to a handle 12 which is located at an upper part of the front cover 1.

The wire member 8 is a member having some flexibility, and when the front end portion thereof shown in Fig. 1 is retained by the holder 6, the exposed portion forms a loop-shape so that it bulges to the left and right from the outer shape of the front cover 1 (Fig. 3). Once the front end portion of the wire member 8 is released from the holder 6, it can be further extended forward to serve as a length adjustable member. Also, the front cover 1 is formed with through holes 13 in which protection members 14 such as rubber pipes are engaged, the portion of the wire member 8 entering the front cover 1 through the holes 13. It is of course possible to omit the protection members 14. There are also provided protector rubbers 15 on the portions of the main frame 10 which the wire member 8 may contact.

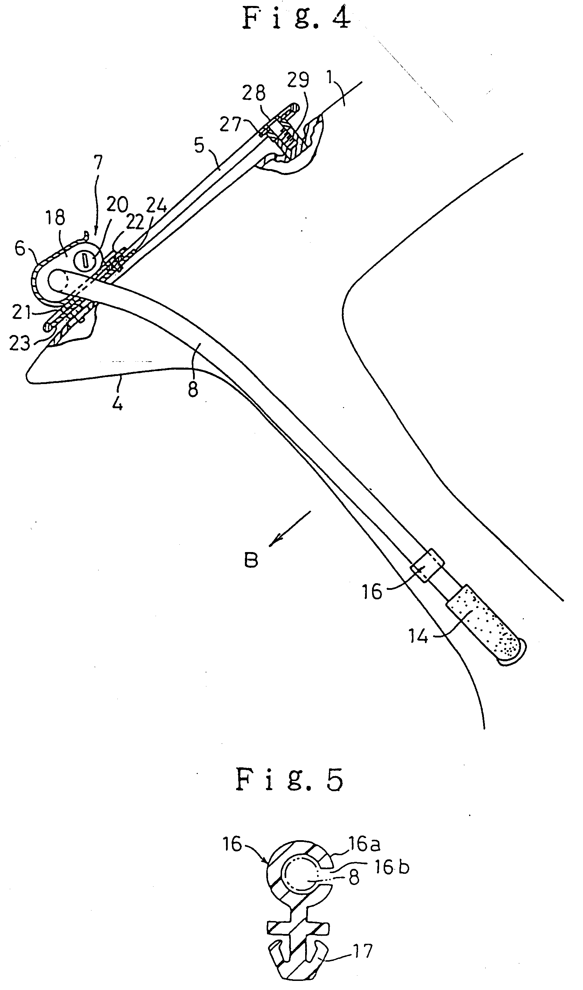

Fig. 4 is a view showing the relation between the exposed side surface portion of the wire member 8 and the front part of the front cover 1. The wire member 8 has a portion retained by a clip 16 in the vicinity of the protection member 14 so that it can be situated at the side surface of the front cover 1. As seen from the enlarged sectional view of Fig. 5, the clip 16 has a C-shaped cross section 16a into which a portion of the wire member 8 is fitted and also has a retaining portion 17 which is engageable with the front cover 1.

Also, the C-shaped cross-section 16a of the clip 16 is provided with a slit portion 16b (Fig. 5). Since the clip is attached to the front cover 1 with the slit opening faced downwardly (in the arrow direction B of Fig. 4), the wire member 8 may easily be slipped out of the clip 16 in the downward direction if a large force is downwardly applied to the wire member 8. This arrangement prevents the wire member 8 from damaging the vehicle body side, such as the front cover 1, and it is quick and easy to engage the wire member 8 with an immovable fixed member (not shown) such as a guardrail support.

The exposed portion of the wire member 8 extends close to the lower edge of the front cover 1. The wire member 8 is divided at a portion retained by the holder 6 and the one end thereof is provided with a locking member 18. The other end of the wire member 8 carries a second locking member in the form of a lock engaging portion 19 (see Fig. 3), the tip portion of which is connected to the lock member 18 for locking. Once the tip portion of the engaging portion 19 is locked to the lock member, the wire member 8 forms a closed loop, which may be opened by unlocking the engaging portion 19 from the lock member 18.

The engaging portion 19 is locked when it is inserted into an insertion opening (not shown) of the lock member 18. In this condition a key (see Fig. 14 described later) is inserted into a key hole 20 (Fig. 4) for unlocking so that the engaging portion 19 becomes separable from the lock member 18.

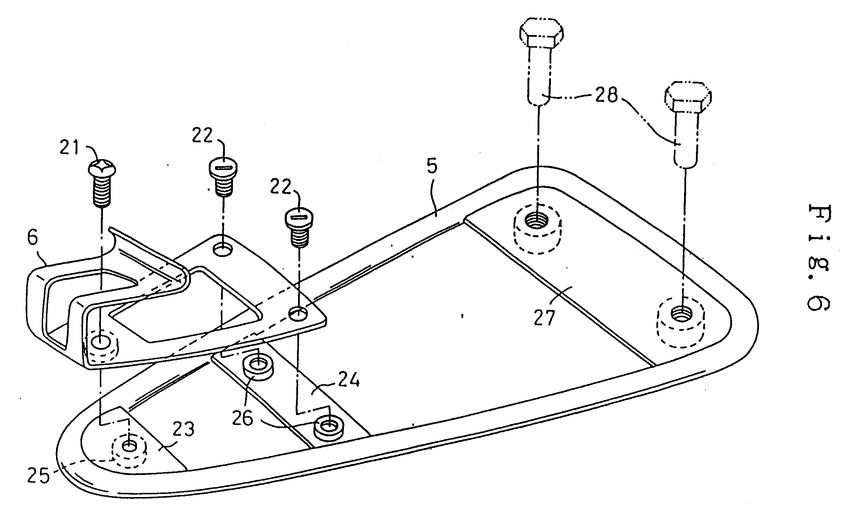

In the present embodiment, the lock member 18 and the engaging portion 19 are arranged to be connected to or disconnected from each other substantially on the center line of the vehicle body. The lock member 18 is detachably mounted to the holder 6 having a substantially U-shaped section. Fig. 6 is a view showing the relation between the holder 6 and the lock bracket 5. The holder 6 is secured to the lock bracket 5 by engaging screws 21 and 22 with weld nuts 25 and 26 on cross plates 23 and 24 extending between sides of the lock bracket 5. The lower end portion of the lock bracket 5 and the holder 6 are both secured by the screw 21 to the front cover 1.

The upper side of the lock bracket 5 is secured to the front cover 1 by engaging bolts 28 through a cross plate 27 with bosses 29 (see Fig. 4) protruding from the front cover 1. Further, the lock bracket 5 is situated well below the carrier basket 30 (see Fig. 1) so that the basket does not obstruct the mounting and dismounting operations of the lock member 18.

Referring again to Fig. 1, when the wire lock 7 is engaged with the front wheel 3, the lock member 18 and the engaging portion 19 are interconnected in the space 32 between spokes 31. The wire member 8 has a maximum length such that it can extend forward of the front of the front wheel 3 in the closed loop condition, and thus drop to the ground without engaging with the front wheel 3.

Reference numeral 33 in Fig. 2 shows a container.

Next, the mode of operation is described. As shown in Fig. 1, the lock member 18 is retained by the holder 6 during driving of the motorcycle. In this case, since the exposed portion of the wire member 8 extends along the lower edge of the front cover 1 and covers both side surfaces and the front thereof, it presents the appearance the the front cover 1 is provided with a lace. Therefore, since the wire lock 7 functions as a decorative part during driving of the motorcycle and it also enhances the appearance of the front cover, an active and efficient usage of parts can be attained. Also, since the wire member 8 according to the present embodiment is relatively rigid, it can serve not only as a kind of bumper, but also as a protection member.

In addition, since the lock member 18 and the engaging portion 19 are designed to be connected to and disconnected from each other substantially on the center line of the vehicle body, it is easy and quick to engage the wire member 8 of the wire-lock 7 with the front wheel 3 or disengage the wire member 8 from the front wheel 3.

If during driving of the motorcycle the lock member 18 slips out of the holder 6 for some reason, the wire member 8 drops to the ground, hanging from the through holes 13. In this case, the maximum length of the wire member 8 is arranged such that the lock member 18 extends further than the front of the front wheel 3 and therefore, it can pass by without touching the front end of the front wheel 3, whereby the front wheel can pass over the wire member 8.

Further, when the motorcycle is stopped, the loop is opened by unlocking the lock member 18 from the engaging portion 19, and then the lock member 18 and the engaging portion 19 are inserted into the space 32 of the front wheel 3 from opposite sides. They are then engaged again with each other to form a closed loop of the wire member 8, so that the front wheel 3 and the main frame 10 are connected by the wire member 8 and the vehicle cannot be moved.

Still further, it is possible to wind the wire member 8 around immovable fixed members such as a roadside guardrail support, rather than through the front wheel 3.

The second embodiment will be described below in conjunction with Figs. 7 through 9, in which the same or similar parts as those shown in the first embodiment are denoted by the same reference numerals.

Fig. 7 shows the external side surface, partially cut away, of the vehicle body front part of a motorcycle similar to that shown in the first embodiment, and Fig. 8 shows the condition of the vehicle body front part viewed diagonally from the front.

In Fig. 7 and Fig. 8 the lock bracket 5, the holder 6 and the wire-lock 7 are the same as in the first embodiment.

The wire member 8 (Fig. 7) is arranged to have a substantial V-shape when the lock member 18 is supported by the holder 6, and the front portion thereof is exposed to surround the front surface of the front cover 1 from the left and right sides. Also, this front portion of the wire member 8 forms a loop-shape by bulging in the left and right directions away the outer shape of the front cover 1 (refer to Fig. 8).

A rear side portion of the wire member 8 enters the front cover 1 via through holes 40 formed at bottom portions of the front cover 1, and extends in a diagonally upward direction to be secured at its rear end to a front cover stay 41 by a suitable means. The through holes 40 are formed forwardly of the front fork 2 and relatively near the holder 6.

The front cover stay 41 is a member extending forward from the headpipe 11 which constitutes a part of the vehicle body frame, and has a front end portion at which the front cover 1, the lock bracket 5 and the carrier basket 30 are secured together by bolts 42.

As is apparent from Fig. 7, when the lock member 7 is disengaged from the holder 6, the front side portions of the wire member 8 extend downwardly in line with the rear side portions, to reach the side of the front wheel 3, whereby the lock member 18 and the engaging portion 19, which have previously been separated from each other, may be inserted from both sides of the front wheel 3 into a space 32 between the spokes 31 where they are connected again to each other.

Fig. 9 is an enlarged sectional view taken along line C-C of Fig. 7, showing through holes 40 formed to open downwardly at both ends of a fender portion 4 formed at the bottom of the front cover 1, to communicate the inner space 43 of the front cover 1 above the fender portion 4 with the outer space below the fender portion 4. The left and right portions of the wire member 8 pass through the through holes 40 in the up and down direction.

It is to be noted that these through holes are relatively small ones formed in after treatment by a distributor after delivery of the motorcycle. It is of course possible to form such through holes 40 in advance before the delivery of the motorcycle by a manufacturer, or if the fender portion 4 is provided in advance with large holes for another purpose, then it is not always necessary to form any new through holes 40 but rather to make use of such existing holes.

Next, the operation of this embodiment will be described. In Figs. 7 and 8, the lock member 18 is retained by the holder 6 during driving of the motorcycle. In this case, the wire member 8 is curved to a substantially V-shaped form when viewed from the side, and its front part extends over the left and right sides of the front cover 1 and the front surface thereof. Accordingly, during driving of the motorcycle, the exposed portion of the locking device functions as decorative component in the same manner as in the first embodiment. As the exposed portion of the wire member 8 is limited to its front portion and the length of the exposed portion can be shortened to a certain degree, it is possible to reduce any looseness of the exposed portion of the wire member 8 by vibration arising during driving of the motorcycle, so that its function as a decorative component is maintained.

Furthermore, since the through holes are formed to face downwardly in the fender portion 4 located at the bottom of the front cover 1, and are not exposed, it is possible to form the through holes without marring the appearance of the vehicle body and also to make these hole easily after delivery of the motorcycle.

As is apparent from Fig. 8, since the wire member 8 is curved in a substantially V-shaped form when viewed from the sides, the front portion thereof receives a force in the arrow direction D by its own restoring elasticity. Accordingly, as the lock member 18 is always forced in a direction to push against the holder 6, the retainment of the holder against the lock member 18 is firmly secured.

Also, since the rear portions of the wire member 8 are situated in the inner space 43 of the front cover 1 and are secured to the front cover stay 41 at the center part of the rear ends, which curve in the left and right directions, the rear portions of the wire member 8 extending vertically in the left and right sides of the inner space 43 receive, by their own restoring elasticity, force in the arrow directions E and F towards the outside. Therefore, the rear portions of the wire member 8 extend outwardly away from each other.

It is to be noted that the wire member 8 is not necessarily a one piece member, but it may be made in two pieces by dividing the rear end portion into two so as to form left and right members. In this case, each of the rear end portions is secured to the front cover stay 41 and they can be connected to each other through the front cover stay 41.

The third embodiment will now be described with reference to Figs. 10 to 13. In the this embodiment, only the rear structure of the wire member 18 and its attachment structure are different from the first embodiment. The wire member 8 is attached to the vehicle body surface in an exposed condition and the front parts are arranged to extend over the side surfaces of the front cover 1 and the front surface thereof along the lower edge portion, being secured at the intermediate left and right regions to the side surfaces of the front cover 1 by clips 16. The rear parts comprise floor side portions 50 extending along the left and right sides of a step floor 9, and floor end portion 51 extending along the rear end portion of the step floor 9 in the direction of the vehicle body width.

The floor end portion 51 curves around the bottom of a container 33 rising from the rear end of the step floor 9. The floor end portion 51 is an independent member divided from the floor side portions 50 and connected to the rear ends of the floor side portions 50 by way of wire brackets 52 of substantially L-shaped form. The front portions of the floor side portions 50 are also secured to the step floor 9 by wire brackets 53.

As is apparent from Fig. 11, the wire brackets 52 and 53 are attached to stays 55, provided on under-the-floor portions 54 of the main frame 10, by bolts 56.

Fig. 12 is an enlarged sectional view taken along line G-G of Fig. 10, showing how the wire bracket 53 for securing the floor side portion 50 is put on the step floor 9 and secured by making use of the stay 55 provided for securing the step floor 9 and fastening the bolt 56 to a weld nut 57 provided on the stay 55.

Fig. 13 is a view showing in perspective the shape of one of the wire brackets 52 (the left hand one relative to the driving direction of the vehicle body). The wire bracket 52 is secured to the under-the-floor portion 54 (see Fig. 11) in the same manner as the wire bracket 53, but it has generally a substantially L-shaped form with connecting portions 58 and 59 protruding laterally and rearwardly.

The laterally extending connecting portion 58 holds and secures the rear end of the floor side portion 50 in the same manner as the wire bracket 53, while the rearwardly extending protrusion 59 firmly grips one end of the floor end portion 51 by caulking or the like. The other wire bracket 52 on the right hand side is formed symmetrically with the left hand one.

Accordingly, the rear ends of the floor side portions 50 and the ends of the floor end portion 51 are connected by the wire brackets 52 so that the wire member 8 forms a loop as a whole. In this embodiment, the connecting portions 58 and 59 are formed such that the floor end portion 51 is connected at an acute angle to each floor side portion 50.

Referring to the bolt 56 for attaching the wire brackets 52 and 53 to the stay 55, it is possible to destroy the thread thereof by screwing it too hard over a certain torque, so that it is not detachable.

In addition, it is common to attach a floor mat (not shown) to the step floor 9 by heat treatment. In this case, it is also possible to effect the heat treatment on the floor mat so that the floor mat covers the wire brackets 52 and 53 which are secured at least by bolts 56 to the step floor 9. If the thickness of the floor mat is arranged to be thinner over the wire brackets 52 and 53, it is possible to form the floor mat with a flat top surface.

Next, the operation of the present embodiment will be described. In Figs. 10 and 11, the lock member 18 is retained by the holder 6 during driving of the motorcycle and the wire member 8 is exposed over its whole length, to extend from the lower edge of the front cover 1 to the rear end of the step floor 9. Thus it appears that a long lace is attached to the vehicle body side surface and all of the wire-lock 7 functions as a decorative component, to enhance the appearance of the vehicle body.

Further, the wire member 8 can be easily and quickly attached to the vehicle body without any special treatment, because the rear portion of the wire member 8 is secured to the step floor 9 by the bolts 56 by making use of the stay 55 provided for securing the step floor 9, which is very convenient. It is also easy to attach the wire member 8 after delivery of the motorcycle.

Still further, since the floor end portion 51 is arranged along the bottom of the container 33 located at the rear end of the step floor 9, the driver's heel does not easily touch the floor end portion 51. In addition, since the floor end portion 51 is divided from the floor side portions 50 and they are connected to each other by the wire brackets 52, it is possible to arrange the connection between the floor end portion 51 and the floor side portions 50 at an attractive acute angle.

In this embodiment, the wire member 8 is not necessarily formed in a loop shape, but it may be a pair of members with each one attached to a respective side of the vehicle body. In this case, the floor end portion 51 can be omitted.

Another embodiment of the holder is described below. In this case, the vehicle to be provided with the holder is the same as that shown in the foregoing embodiments, for example in Figs. 7 and 8, and the description may therefore be read in conjunction with these Figures (which also applies to the following embodiments).

Fig. 14 is an exploded perspective view showing the lock bracket 5 together with a wire-lock, Fig. 15 is a plan view of the lock bracket 5, and Fig. 16 is a cross-sectional view taken along line H-H of Fig. 15. As shown in each of these Figures, the lock bracket 5 includes an elongate plate 60 having at one end attachment holes 61 and at the other end the holder 6. Since the holder 6 is adapted to engage with the lock member 18 to retain the latter, it is provided with one retaining wall 62 with the end of the plate 60 curved, and with another retaining wall 63 formed to face the wall 62.

A resilient plate 64 made of a leaf spring is located with its open end protruding upwards inside of the retaining wall 62, and a pair of stoppers 65 with opposed upright walls are provided on the left and right sides between the retaining walls 62 and 63. A bolt 66 protrudes downwardly on the tip end of the holder 6.

As shown in Fig. 14, the plate 60 is mounted on the front cover 1 by inserting bolts 64 from the front into attachment holes 61, to be connected to nuts 67 at the opposite side, and then attaching the nuts 67 to the front cover stay 41 or the like as shown in Fig. 7. The bolt 66 of the holder 6 is also inserted into the front cover 1 to be secured by nut 69 through washers 68 inside of the front cover 1.

Further, the lock member 18 of the wire-lock shown in Fig. 14 is provided with a key hole 20 into which a key 34 is inserted to release the lock.

When the holder 6 according to the present embodiment is used, the lock member 18 is inserted diagonally between the retaining walls 62 and 63 as shown in Fig. 16, and then rotated to enter between the inside of the retaining wall 63 and the resilient plate 64 while resiliently deforming the plate 64, and finally is held firmly between the retaining wall 63 and the plate 64. In this condition, the lock member 18 is securely retained by the holder 6, and the attachment operation is quite easy and quick.

Also, since both sides of the lock member 18 are held between the pair of opposed stoppers 65, it is possible to control lateral slippage. When the lock member 18 is to be removed from the holder 6, it can be pulled out by tilting it diagonally. Thus it is easy and quick to pull the lock member 18 out of the holder 6.

In this case, if either of the retaining walls 62 and 63, or both of them, or the holder itself, is made of a resilient material, it is possible to omit the resilient plate 64.

Figs. 17 through 19 relate to a fifth embodiment showing a more simplified holder 6: Fig. 17 is a perspective view showing the appearance of the holder 6; Fig. 18 is a view showing the retaining condition of the lock member 18; and Fig. 19 is a view showing the manner of disconnecting of the lock member 18.

As shown in Figs. 17 and 18, the holder 6 is provided with a main body 70 of a flat plate shape, the upper part of which is formed with attachment holes 71. Integrally formed with the lower part of the main body 70 is a hook portion 72 which is bent upward to have a substantially J-shaped section and is adapted to overlap partly towards the upper part of the main body. The lock member 18 is inserted and retained between this hook portion 72 and the main body 70. This means that the gap between the hook portion 72 and the main body 70 is substantially the same as the thickness of the portion of the lock member 18 to be retained.

The holder 6 is provided, at its upper part and on the left and right sides, with a pair of upper stoppers 73 which are bent substantially at a right angle and protrude to the side of attachment surface of the lock member 18. The amount of protrusion of the upper stoppers 73, at their tips, is close to the width of the gap between the hook portion 72 and the main body 70, and the distance between these stoppers is greater than the left to right width W (see Fig. 18) of the lock member 18, whereby the lock member 18 can be housed on the main body 70 of the holder 6.

In addition, there is provided a pair of lower stoppers 74 at the lower end of the holder 6 and on both sides of hook portion 72, which protrude in the same direction as the upper stoppers 73. The gap between the lower stoppers 74 is bigger than the width W and smaller than the gap between the upper stoppers 73.

The main body 70 is attached to the front cover 1 (see Fig. 7) by screws 75 (see Fig. 18) through the lock bracket 5 (see Fig. 7 or Fig. 14), or attached directly to the front cover 1 not through the lock member 18.

When the lock member 18 is to be inserted in the holder 6, as shown in Fig. 19, the lock member 18 is unlocked to release the end portion 76 of the engaging portion 19. In such a condition, the lock member 18 is inclined to insert the connecting end portion 77 of the wire member 8 between the upper stopper 73 and the lower stopper 74. Then the lock member 18 is inserted between the main body 70 and the hook portion 72, between the upper stoppers 73.

Subsequently, as shown in Fig. 18, the end portion 76 of the engaging portion 19 is engaged with the lock member 18 to be locked.

With this operation, even if the lock member 18 is pulled in the upward or downward direction of the Figure, the engaging portion 19 and the connecting end portion 77 engage with the upper stopper 73 or the lower stopper 74 to prevent the release.

Also, if the lock member 18 is pulled out in the left or right direction of the Figure, the ends thereof engage with the left and right lower stoppers 74 and the upper stoppers 73 to prevent the release. Accordingly, the lock member 18 cannot be pulled out of the holder 6.

In order to release the lock member 18 from the holder 6, the lock member 18 is first unlocked to release the end portion 76 and then the engaging portion 19 is separated from the lock member 18. The lock member 18 is now released from the holder 6 by the reverse process from the engaging process Thus, according to the present embodiment, it is possible to simplify the structure of the holder 6 and to easily effect the mounting and dismounting operations of the lock member 18.

Fig. 20 relates to a sixth embodiment showing a holder 6 with a simplified structure. The holder 6 is provided with a main body 80 of a substantially C-shaped section, one end of which is connected to one end of a rubber strap 81. The rubber strap 81 is provided at its other end with an engaging portion 82 which detachably engages with a curved hook portion 83 formed at the other end of the main body 80, by extending the rubber strap 81.

It is possible to mount the holder 6 to the front cover 1 in the same manner as the foregoing embodiment, by making use of attachment holes 84 formed in the center of the main body 80. With this arrangement, since the engagement or disengagement of the lock member 18 is simply effected by the engagement or disengagement of the engaging portion 82 of the rubber strap 81, it is further possible to simplify the structure of the holder 6.

Fig. 21 relates to a seventh embodiment in which the holder 6 of the foregoing embodiment is further simplified. In this embodiment, the lock bracket 5 is bent at its one end to have a substantially J-shaped section, the tip of which is provided with a hook portion 83. A rubber strap 81 is provided with one end engageable with or disengageable from the hook portion 83 and the other end of the rubber strap 81 is attached to the lock bracket 5. With this structure, the holder 6 can be formed integrally with the lock member 18.

An eighth embodiment will be described below in conjunction with Figs. 22 through 26. This embodiment is for locking the rear wheel of a scooter type motorcycle. Fig. 22 is a view showing a rear portion of the vehicle body during driving of the motorcycle, viewed diagonally from the right rear. Fig. 23 is a view showing the same portion as that of Fig. 22 and the locking condition thereof. Fig. 24 is a view showing the rear portion, partially cut away, of the left side of vehicle body.

Referring first to Fig. 24, a swing type power unit 91 is swingably supported on the rear portion of a rear frame 90 which extends lengthwise and is connected at its front end to a main frame 10 (refer to Fig. 1).

The power unit comprises a transmission 92, at the rear portion of which a rear wheel 93 is supported and at the front portion of which an engine 94 is provided. An exhaust pipe 95 connected to the engine 94 extends rearwardly to be connected at its rear end to a muffler which is arranged across the right side of the rear wheel 93.

The rear portion of the rear frame 90 extends diagonally above the power unit 91 and the rear wheel 93, and a container 97 is supported above the engine 94. The container 97 has an upward opening which is opened and closed by a cover 98.

The rear periphery of the rear frame 90, including the periphery of the container 97, is covered by a rear cover 99.

As shown in Figs. 22 and 23, there is provided a through hole with a grommet 101 at the lower part of the lower side surface 100 of the container 97 (see Fig. 22), to the rear of and in the vicinity of the step floor 9. Also clips 16 are provided at suitable intervals on the intermediate portion of the lower side surface 100.

An exposed portion of the wire member 8 constituting the wire-lock 7 is attached to the lower side surface 100. In Figs. 22 and 23, the right side 8R of the wire member 8 is mainly shown and extends from the through hole 101 to the holder 6 provided on the rear surface portion 102 of the rear cover 99, being retained on its way by the clips 16.

It is to be noted that here is shown only the right side of the vehicle body, but the opposite left side thereof is the same as the right one, whereby the left side 8L of the wire member 8 is attached to the lower side surface of the vehicle body to form the wire-lock 7 at its rear end.

An engaging portion 19 (refer to Fig. 23, and Fig. 25 described later) provided at the rear end of the right side 8R of the wire member 8 is detachably connected to the lock member 18 which is also detachably mounted on the holder 6.

The length of the wire member 8 exposed on the rear cover 99 is such that the wire member 8 can be supported by the holder 6 without substantial looseness during driving of the motorcycle (see Fig. 22), whilst when the motorcycle is stopped (see Fig. 23) the lock member 18 and the engaging portion 19, disconnected from the holder 6, may be moved down to the rear wheel 93 and inserted in the space formed between spokes 103 and a rim 104 for coupling to each other.

Fig. 25 is a view showing the wire-lock 7 and the holder in detail. The wire member 8 is a long member comprising a right side portion 8R, a left side portion 8L and an intermediate portion 8C connected the rear frame 90 in a manner described below. The wire member 8 has such a strength and flexibility that cannot be easily cut, and forms a closed loop when the lock member 18 is connected to the engaging portion 19. The lock member 18 is provided with an engaging hole 18a and a key hole 20 with which the engaging portion 19 is detachably engageable.

The holder 6 is secured to the rear surface portion 102 (see Figs. 22 and 23) by inserting screws into attachment holes 106 formed on an attachment portion 105, while a supporting portion 107 is bent to have a substantially J-shaped section on the attachment portion 105, to define a gap in which the lock member 18 can be firmly held.

Fig. 26 is a view showing the inside of the container 97, the bottom of which is partially cut away, viewed from the arrow direction J of Fig. 22. The intermediate portion 8C of the wire member 8 which enters the inside of the rear cover 99 via the through hole 101 in the lower side surface 100, crosses the vehicle body in the direction of the vehicle width to pass near the rear frame 90, and is entwined around a cross-pipe 110 provided between left and right side members of the rear frame 90.

Next, the operation of this embodiment will be described. Referring first to Fig. 22, during driving of the motorcycle, the lock member 18 engaged with the holder 6 and is retained by the latter with the right side 8R and the left side 8L extending from the rear surface portion 102 to the lower side portion 100.

As a result, the left side 8L and the right side 8R of the wire member 8 function as decorative members, as if they were laces attached to the left and right side surfaces of the rear frames 90, and the appearance of the vehicle body is thereby enhanced. Accordingly, it is possible to make use of the wire member 8 efficiently even during driving of motorcycle, so as to improve the efficient use of components.

In this case, the existence of the clips 16 is useful for supporting the right side 8R and the left side 8L of the wire member 8 in attractive fashion.

Also, in this condition, as the intermediate portion 8C is entwined around the cross-pipe 110 of the rear frames 90 (Fig. 26), it is impossible to release the wire-lock 7 from the vehicle body.

Next, when locking is desired with the motorcycle stopped, the wire-lock is first unlocked to separate the lock member 18 from the engaging portion 19 as shown in Fig. 23, and then the lock member 18 is disconnected from the holder 6 and moved to the left side of the rear wheel 93.

On the other hand, the engaging portion 19 is moved to the right side of the rear wheel 93 to be inserted in a space formed between the spokes 103 and the rim 104 and it is then connected to the lock member 18 situating on the left side of the rear wheel 93 to form a closed loop of the wire member 8.

Accordingly, the rear wheel 93 is connected via the wire member 8 to the cross-pipe 110, and if the wire member 8 is pulled back by rotation of the rear wheel 93, the intermediate portion 8C of the wire member 8 entwined around the cross-pipe 110 is retained by the cross-pipe 110. Consequently, the rear wheel 93 cannot be rotated and as a result, the motorcycle itself is held in an immovable fixed condition.

Further, in this case, since the lock member 8 is situated on the left side of the rear wheel 93 opposite to the muffler 96, it is possible to effect such a locking or unlocking operation without any interference from the muffler 96.

Still further, once the wire member 8 is disconnected from the clips 16, it can be extended along the vehicle side as shown by a virtual line in Fig. 23 and it then becomes easy to lock the motorcycle by extending the wire member 8 around a guardrail support or a utility pole. In this case, since the wire member 8 is arranged to surround the rear cover 9 during driving of the motorcycle, it is advantageous that the wire member 8 has enough exposed length.

Fig. 27 is a view corresponding to Fig. 26 and relates to a ninth embodiment of the present invention. In this embodiment, the intermediate portion 8C passes laterally near an engine mount frame 120 so that when the wire member 8 is pulled back it is retained by the engine mount frame 120. The engine mount frame 120 extends upwardly from the front portion of a protrusion 121 formed in front of the power unit 91 and passes through the bottom portion 97a of the container 97.

The protrusion 121 is rotatably connected at its front end to a stay 122 extending rearwardly from the rear frame 90, by bolts 123. With this arrangement, the wire member 8 can be secured to the rear frame 90 by making use of the engine mount frame 120.

## Claims

1. In a motorcycle having an external cover member (1; 99) over a front or rear wheel (3;93) thereof, a lock (7) for the said wheel comprising at least one locking wire (8) connected to the motorcycle body and having two interengageable locking members (18,19) at respective ends thereof, the said lock having an inoperative condition in which the interengaged locking members are received in a holder (6) on the external surface of the said cover member and the parts of the locking wire(s) leading to said locking members extend along the external surface of said cover member in decorative fashion, and an operative condition in which the said locking wire(s) extends through the said wheel to prevent rotation thereof, the locking wire(s) being movable directly to said operative condition upon separating the said locking members from the said holder and from each other, whilst remaining connected to the motorcycle body.

2. A motorcycle as claimed in claim 1, wherein the said locking wire (8) extends around a part of the motorcycle frame (10;110;120).

3. A motorcycle as claimed in claim 1 or 2, wherein the said wheel is a front wheel (3) and the said holder (6) is located on a front surface of the said cover member (1).

4. A motorcycle as claimed in claim 3, wherein the said locking wire(s) (8) is secured to a headpipe (11) of the motorcycle frame and passes through holes (40) in a bottom wall of the said cover member (1).

5. A motorcycle as claimed in claim 3, wherein the said locking wire(s) (8) has parts thereof extending rearwardly along the opposite sides of a floor (9) of the motorcycle body and fastened to the said floor by stays (55).

6. A motorcycle as claimed in claim 1 or 2, wherein the said wheel is a rear wheel (93) and the said holder (6) is located on a rear surface of the said cover member (99).

7. A motorcycle as claimed in claim 6, wherein, in the inoperative condition of the lock (7), the said locking wire(s) (8) extends along the opposite sides of the said cover member (99), being retained thereto by clips (16).

8. A motorcycle as claimed in any of claims 3 to 7, wherein the said holder (6) is of generally U-shaped configuration and opens upwardly.

9. A motorcycle as claimed in any preceding claim, wherein the said locking wire(s) is long enough to be locked around a member separate from the motorcycle, such as a railing.

10. A motorcycle as claimed in claim 9, wherein the said parts of the locking wire(s) leading to the said locking members (18,19) are long enough to touch the ground in front of (or behind) their associated front (or rear) wheel when the said locking members are separated from the said holder (6) and from each other.

11. A motorcycle as claimed in any preceding claim, wherein a protection member (14) is provided where the said locking wire(s) passes through a hole in a said cover member (1).

## Patentansprüche

1. In einem Kraftrad, das über seinem Vorder- oder Hinterrad (3; 93) ein äußeres Abdeckelement (1; 99) aufweist, umfaßt ein Schloß (7) für das Rad zumindest ein Schließkabel (8), das mit dem Kraftradrumpf verbunden ist und an seinen jeweiligen Enden zwei miteinander in Eingriff bringbare Schließelemente (18, 19) aufweist, wobei das Schloß einen Außerbetriebszustand hat, in dem die miteinander in Eingriff stehenden Schließelemente in einem Halter (6) an der Außenoberfläche des Abdeckelements aufgenommen sind und die zu den Schließelementen führenden Teile des zumindest einen Schließkabels in dekorativer Weise entlang der Außenoberfläche des Abdeckelements verlaufen, sowie einen Betriebszustand, in dem das zumindest eine Schließkabel durch das Rad verläuft, um dessen Drehung zu verhindern, wobei das zumindest eine Schließkabel beim Trennen der Schließelemente von dem Halter und voneinander direkt zu dem Betriebszustand bewegbar ist, während es mit dem Kraftradrumpf verbunden bleibt.

2. Kraftrad nach Anspruch 1, in dem das Schließkabel (8) um einen Teil des Kraftradrahmens (10; 110; 120) herum verläuft.

3. Kraftrad nach Anspruch 1 oder 2, in dem das Rad ein Vorderrad (3) ist und der Halter (6) an einer vorderen Fläche des Abdeckelements (1) angeordnet ist.

4. Kraftrad nach Anspruch 3, in dem das zumindest eine Schließkabel (8) an einem Kopfrohr (11) des Kraftradrahmens gesichert ist und durch Löcher (40) in einer Bodenwand des Abdeckelements (1) verläuft.

5. Kraftrad nach Anspruch 3, in dem Teile des zumindest einen Schließkabels (8) entlang der entgegengesetzten Seiten eines Bodens (9) des Kraftradrumpfs nach hinten verlaufen und an dem Boden durch Stege (55) befestigt sind.

6. Kraftrad nach Anspruch 1 oder 2, in dem das Rad ein Hinterrad (93) ist und der Halter (6) nahe einer hinteren Fläche des Abdeckelements (99) angeordnet ist.

7. Kraftrad nach Anspruch 6, in dem im Außerbetriebszustand des Schlosses (7) das zumindest eine Schließkabel (8) entlang der entgegengesetzten Seiten des Abdeckelements (99) verläuft, wobei es daran durch Klemmen (16) gehalten wird.

8. Kraftrad nach einem der Ansprüche 3 bis 7, in dem der Halter (6) eine allgemein U-förmige Konfiguration hat und nach oben offen ist.

9. Kraftrad nach einem der vorhergehenden Ansprüche, in dem das zumindest eine Schließkabel lang genug ist, damit es um ein von dem Kraftrad getrenntes Element, wie etwa ein Geländer, schließbar ist.

10. Kraftrad nach Anspruch 9, in dem die zu den Schließelementen (18, 19) führenden Teile des zumindest einen Schließkabels lang genug sind, um den Boden vor (oder hinter) ihrem zugeordneten Vorder(oder Hinter-)rad zu berühren, wenn die Schließelemente von dem Halter (6) und voneinander getrennt sind.

11. Kraftrad nach einem der vorhergehenden Ansprüche, in dem dort, wo das zumindest eine Schließkabel durch ein Loch in dem Abdeckelement (1) verläuft, ein Schutzelement (14) vorgesehen ist.

## Revendications

1. Motocycle ayant un élément de recouvrement extérieur (1 ; 99) situé au-dessus d'une roue avant ou arrière (3 ; 93) de celui-ci, un antivol (7) pour ladite roue comportant au moins un câble de blocage (8) relié à la carrosserie de motocycle et ayant deux éléments de blocage (18, 19) pouvant venir mutuellement en prise, au niveau de leurs extrémités respectives, ledit antivol ayant un état inactif dans lequel les éléments de blocage pouvant venir mutuellement en prise sont reçus dans un support (6) situé sur la surface extérieure dudit élément de recouvrement et où les parties du câble de blocage (ou des câbles de blocage) aboutissant auxdits éléments de blocage s'étendent le long de la surface extérieure dudit élément de recouvrement d'une manière décorative, et un état actif dans lequel ledit câble de blocage (ou lesdits câbles de blocage) s'étendent à travers ladite roue pour empêcher la rotation de celle-ci, le câble de blocage (ou les câbles de blocage) étant mobile directement vers ledit état actif lors de la séparation desdits éléments de blocage dudit support et l'un de l'autre, tout en restant reliés à la carrosserie de motocycle.

2. Motocycle selon la revendication 1, dans lequel ledit câble de blocage (8) s'étend autour d'une partie du châssis de motocycle (10 ; 110 ; 120).

3. Motocycle selon la revendication 1 ou 2, dans lequel ladite roue est une roue avant (3) et ledit support (6) est situé sur une surface avant dudit élément de recouvrement (1).

4. Motocycle selon la revendication 3, dans lequel ledit câble de blocage (ou lesdits câbles de blocage) (8) est fixé sur un tube de tête (11) du châssis de motocycle et passe à travers des trous (40) situés dans une paroi inférieure dudit élément de recouvrement (1).

5. Motocycle selon la revendication 3, dans lequel ledit câble de blocage (ou lesdits câbles de blocage) (8) a des parties s'étendant vers l'arrière le long des côtés opposés d'un plancher (9) de la carrosserie de motocycle et fixées sur ledit plancher par des goussets (55).

6. Motocycle selon la revendication 1 ou 2, dans lequel ladite roue est une roue arrière (93) et ledit support (6) est situé sur une surface arrière dudit élément de recouvrement (99).

7. Motocycle selon la revendication 6, dans lequel, dans l'état inactif de l'antivol (7), ledit câble de blocage (ou lesdits câbles de blocage) (8) s'étend le long des côtés opposés dudit élément de recouvrement (99), en étant retenu sur celui-ci par des colliers (16).

8. Motocycle selon l'une quelconque des revendications 3 à 7, dans lequel ledit support (6) a une configuration de manière générale en forme de U et s'ouvre vers le haut.

9. Motocycle selon l'une quelconque des revendications précédentes, dans lequel ledit câble de blocage (ou lesdits câbles de blocage) (8) est assez long pour être bloqué autour d'un élément séparé du motocycle, tel qu'une rambarde.

10. Motocycle selon la revendication 9, dans lequel lesdites parties du câble de blocage (ou desdits câbles de blocage) (8) aboutissant auxdits éléments de blocage (18, 19) sont assez longues pour toucher le sol en avant (ou en arrière) de leur roue avant (ou arrière) associée lorsque lesdits éléments de blocage sont séparés dudit support (6) et l'un de l'autre.

11. Motocycle selon l'une quelconque des revendications précédentes, dans lequel un élément de protection (14) est agencé à l'endroit où ledit câble de blocage (ou lesdits câbles de blocage) passe à travers un trou situé dans ledit élément de recouvrement (1).
